(19) Europäisches Patentamt
European Patent Office
Office européen des brevets

(11) **EP 2 380 751 B1**

(12) **EUROPEAN PATENT SPECIFICATION**

(45) Date of publication and mention
of the grant of the patent:
**09.04.2014   Bulletin 2014/15**

(51) Int Cl.:
***B60B 27/00*** *(2006.01)*

(21) Application number: **11162852.5**

(22) Date of filing: **18.04.2011**

(54) **A wheel hub assembly with two rows of rolling bodies**

Radnabenanordnung mit zwei Reihen von Rollkörpern

Ensemble de moyeu de roue avec deux rangées de corps de roulements

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **20.04.2010   IT TO20100328**

(43) Date of publication of application:
**26.10.2011   Bulletin 2011/43**

(73) Proprietor: **Aktiebolaget SKF
415 50 Göteborg (SE)**

(72) Inventor: **Ciulla, Luca
I-10137, TORINO (IT)**

(74) Representative: **Tedeschini, Luca et al
SKF Industrie S.p.A.
Via Pinerolo, 44
10060 Airasca (TO) (IT)**

(56) References cited:
**WO-A1-2005/008085      US-A1- 2005 111 771
US-A1- 2009 052 823      US-A1- 2009 232 435**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a wheel hub assembly with two rows of rolling bodies.

Wheel hub assemblies with two rows of rolling bodies have an axis of rotation and comprise an inner ring and an outer ring arranged coaxially with and externally to the inner ring and, for each row of rolling bodies, an inner raceway and an outer raceway obtained, respectively, on the outside of the inner ring and on the inside of the outer ring in positions axially staggered with respect to one another to permit the wheel hub assembly to support combined loads, i.e. loads that act simultaneously in a radial direction and in an axial direction.

The wheel hub assemblies of the type described above are used in countless applications in the automobile field, and have undergone substantial structural modifications up to the incorporation in the inner and outer rings of flanges connecting to the wheels and chassis, thereby contributing to the creation of compact and light structures, as well as guaranteeing both simplified assembly, and increasingly greater reliability.

Because of the increasingly restrictive anti-pollution regulations that have come into effect in recent years, it has been necessary to study technological solutions aimed, even indirectly, at reducing the energy consumption of automobiles and noxious emissions for the environment such as, for example, carbon monoxide emissions.

US 2009/232435 A1 discloses a wheel hub assembly as defined in the preamble of claim 1.

The object of the present invention is to create a wheel hub assembly with two rows of rolling bodies which, while maintaining high mechanical characteristics and high reliability, permits a significant reduction of consumption and of pollutant emissions.

According to the present invention, there is provided a wheel hub assembly having the features set forth in claim 1. Preferred embodiments are defined in the dependent claims.

The invention will now be described with reference to the attached drawings which illustrate a few non-limitative exemplary embodiments, in which:

- figure 1 illustrates, in cross section, a first preferred embodiments of a wheel hub assembly with two rows of rolling bodies according to the present invention;
- figure 2 is a schematic diagram of the distribution of the loads of the wheel hub assembly in figure 1; and
- figure 3 illustrates, in cross section, a second preferred embodiment of a wheel hub assembly with two rows of rolling bodies of figure 1.

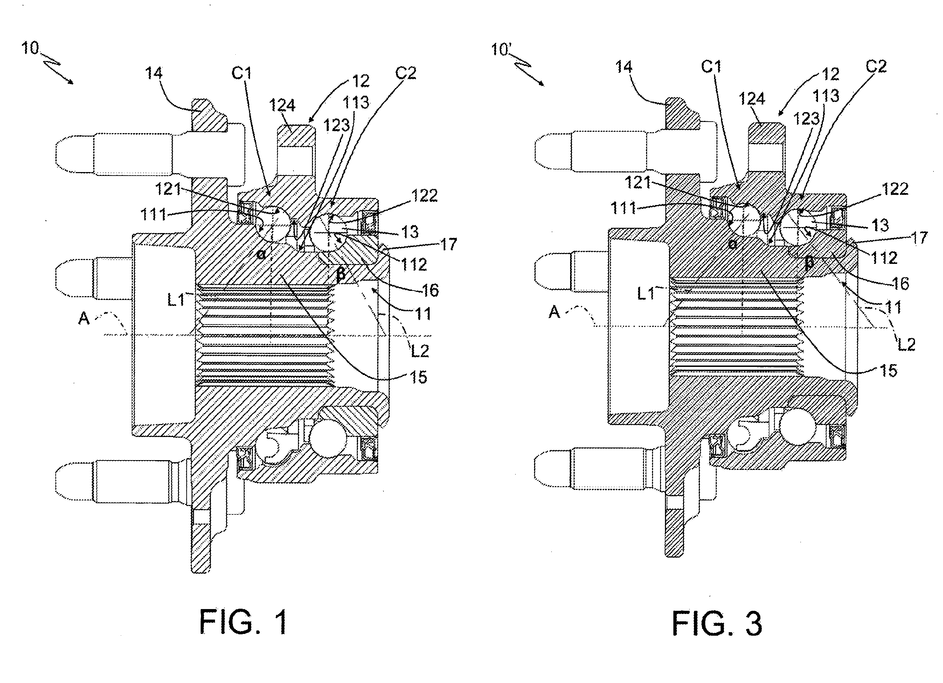

With reference to figure 1, 10 as a whole indicates a wheel hub assembly with an axis A of rotation and comprising an inner ring 11 and an outer ring 12 which are coaxial with respect to one another and to the axis A of rotation and which revolve with respect to one another because of the interposition between them of two rows C1, C2 of rolling bodies 13. In the example described here, the rolling bodies are balls, the centres of which are arranged along respective pitch diameters P1, P2.

Furthermore, the assembly 10 comprises, for each row C1 and C2, an inner raceway 111, 112 and an outer raceway 121, 122 arranged in axially staggered positions to permit the assembly 10 to support combined loads, which act simultaneously both in the radial direction and in the axial direction, and are transmitted between balls 13 and inner raceways 111, 112 and between balls 13 and outer raceways 121, 122 along respective load lines L1, L2. In particular, the load lines L1, L2 join the points of contact between the balls 13 of each row C1, C2 with the associated inner raceways 111, 112 and the associated outer raceways 121, 122, and form respective angles $\alpha$ and $\beta$ of contact with respective lines perpendicular to the axis A on a radial plane.

The inner raceways 111, 112 are obtained outside the inner ring 11, while the outer raceways 121, 122 are obtained directly on an inner surface 123 of the outer ring 12 which, in the example of embodiment illustrated, is also provided with an outer flange 124 for anchoring the assembly 10 to a vehicle.

The inner ring 11 is an inner flanged ring to permit the fitting of a wheel to the assembly 10, and comprises:

- a flange 14 transversal to the axis A of rotation,
- a spindle 15 which extends along the axis A of rotation and is made of the same material as the flange 14, and
- an applied inner ring 16, which is mounted on the spindle 15, and is axially blocked by a rolled edge 17.

The flange 14 and the ring 16 define, for the assembly 10, the so-called "outboard side" and, respectively, the "inboard side", and the inner raceway 111 of the row C1 is obtained directly on an outer surface 113 of the spindle 15 in the vicinity of the flange 14, while the inner raceway 112 of the row C2 is obtained directly on the applied ring 16. Alternatively, according to a form of embodiment that is not illustrated, the inner raceway 111 of row C1 can be also obtained directly on a respective applied ring in an intermediate position between the flange 14 and the ring 16 and axially blocked by the flange 14 and ring 16 themselves.

In the embodiment illustrated, the dimensions of the pitch diameter P1 of the row C1 are greater than those of the pitch diameter P2 of row C2, but everything described in this description can also be advantageously applied to a wheel hub assembly in which the dimensions of the pitch diameter P1 of the row C1 are the same as the dimensions of the pitch diameter P2 of the row C2. For the sake of clarity, it is nevertheless worth underlining that an asymmetrical wheel hub assembly with a pitch diameter P1 of the row C1, i.e. of the "outboard side" row, that is greater than the pitch diameter P2 of the row C2, i.e. of the row on the "inboard side", has, with all the other dimensions being the same, greater rigidity than a symmetrical wheel hub assembly in which the dimensions of the pitch diameters of P1 and P2 are the same.

For the purpose of reducing the friction between rolling bodies 13 and raceways, the magnitudes of the angles $\alpha$, $\beta$ of contact of the wheel hub assembly 10 described above differ from one another and, in particular, the magnitude of the angle $\alpha$ of contact of row C1 is greater than the magnitude of the angle $\beta$ of contact of the row C2.

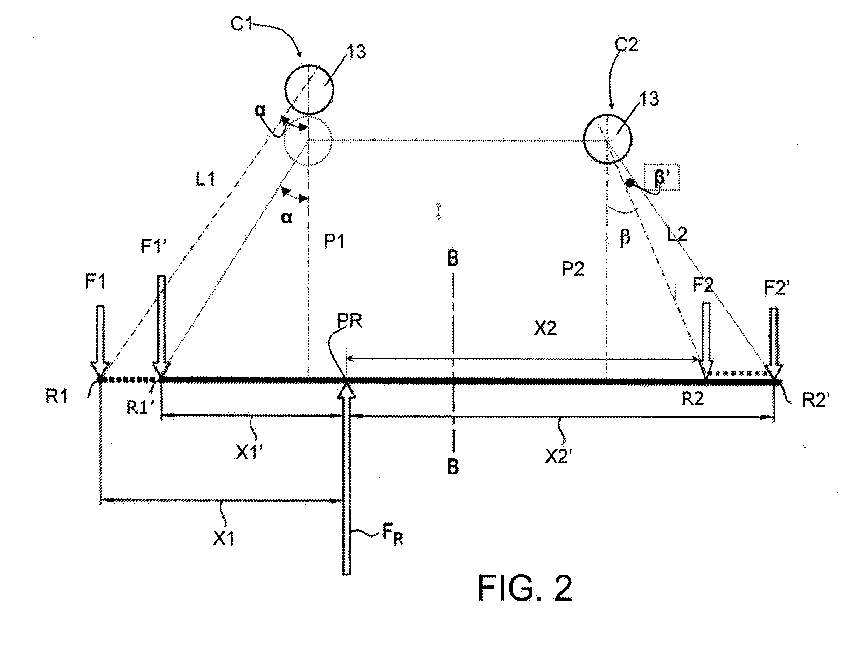

Figure 2 provides a schematic illustration of the load diagram of the wheel hub assembly 10 of this invention in the case in which it is subjected to a wheel load FR applied at a centre PR of application located along the axis A of rotation.

The rows C1, C2 of the wheel hub assembly 10, subjected to the wheel load FR, react with respective forces F1, F2 of reaction, which are applied at the respective centres R1, R2 of reaction which are identified along the axis A of intersection of the associated lines L1, L2 of force with the axis A, and are at axial distances X1, X2 respectively from the centre PR of application.

In particular, it was found that the optimum conditions in terms of reduction of friction are obtained when the values of the trigonometric tangents of the two angles $\alpha$, $\beta$ of contact are linked by the following relation:

$$tg\beta = tg\alpha * \left[ \frac{X2 + X1}{X1} - \frac{X2}{X1} * K \right]$$

where:

$$K = \frac{P1}{P2}$$

With reference to figure 2, if the wheel hub assembly is symmetrical, i.e. with k equal to 1, and if the angles $\alpha$, $\beta$' of contact have the same magnitude, the forces of reaction, indicated in this case by F1', F2' would be applied in respective centres R1', R2' of reaction at axial distances X1', X2' respectively from the centre PR of application.

Considering the load diagram of the symmetrical wheel hub assembly 10 (k=1), but with different magnitudes of the angles $\alpha$, $\beta$ of contact, i.e. with the magnitude of the angle $\beta$ smaller than the magnitude of the angle $\alpha$ and smaller than the magnitude of the angle $\beta$' and comparing it with the load diagram of a symmetrical wheel hub assembly and with the same magnitudes of the angles $\alpha$, $\beta$, of contact, the centre R2 of reaction of the force F2 of reaction is displaced to an axial distance X2 smaller than the distance X2' with a consequent increase of the intensity of the force F2 of reaction. However, the reduction of the magnitude of the angle $\beta$ of contact gives rise, at kinematic level, to a reduction of the revolution speed of the balls 13 around the axis A with a consequent reduction of the friction between balls 13 and raceways 112, 122.

When, on the other hand, the wheel hub assembly 10 is asymmetrical, i.e. k is greater than one, and the angles $\alpha$, $\beta$ of contact have different magnitudes, the centre R1 of reaction of the force F1 of reaction will be displaced, as compared to the previous case of a symmetrical wheel hub assembly, an axial distance X1 greater than the distance X1' with a consequent decrease of the intensity of the force F2 of reaction and a better distribution of the forces F1, F2 of reaction without any substantial variation of the speed of revolution of the balls 13 of the row C1 around the axis A. Therefore, in an asymmetrical wheel hub assembly 10, as well as benefitting from greater rigidity, there is also the benefit of better distribution of the forces, thereby allowing the balls 13 of each row C1, C2 to work in better load conditions and with less friction between the raceways and the balls 13 to the complete advantage of lower consumption and pollutant emissions.

The embodiment illustrated in figure 3 refers to a wheel hub assembly 10' which is similar to the wheel hub assembly 10, from which it differs in that the dimensions of the outer diameters $\Phi$1 of the balls 13 of the row C1 are not the same as the dimensions of the outer diameters $\Phi$2 of the balls 13 of the row C2, but are smaller than the dimensions of the outer diameters $\Phi$2 of the balls 13 of the row C2. The reduction of the outer diameters $\Phi$1 of the balls 13 entails, with the same dynamic and structural conditions described above, a reduction of the tangential velocity between the balls 13 and raceways and, therefore, a reduction of the friction.

As what has been described above can also be advantageously applied to a symmetrical wheel hub assembly in which the dimensions of the pitch diameter P1 of the row C1 are equal to the dimensions of the pitch diameter P2 of the row C2, it should also be understood that the above can also be applied advantageously to an asymmetrical wheel hub assembly in which, however, the dimensions of the pitch diameter P1 of the row C1 are lower than the dimensions of the pitch diameter P2 of the row C2.

It is intended that the invention not be limited to the embodiments described and illustrated herein, which are to be considered as exemplary embodiments of the wheel hub assembly with two rows of rolling bodies. Rather, the invention is open to further modifications as regards shapes and arrangements of the parts, and constructional and assembly details.

**Claims**

1. A wheel hub assembly (10) (10') with a dual row (C1, C2) of rolling bodies (13), the wheel hub assembly having an axis (A) of rotation and comprising, for each row (C1) (C2) of rolling bodies (13), an inner raceway (111, 112) and an outer raceway (121, 122), which are axially arranged in accordance with a respective angle of contact and along a respective load line (L1, L2) in order to allow the assembly to support combined loads; wherein the angle of contact of a first outboard row (C1) of rolling bodies (13) of the two rows (C1, C2) of rolling bodies (13) has a magnitude which is different from the magnitude of the angle of contact of a second inboard row (C2) of rolling bodies (13) of the two rows (C1, C2) of rolling bodies (13);

   **characterized in that**

   the angle of contact of the first outboard row (C1) of rolling bodies (13) has a magnitude which is greater than a magnitude of the second inboard row (C2) of rolling bodies (13);

   the first outboard row (C1) of rolling bodies (13) and the second inboard row (C2) of rolling bodies (13) react to a wheel load (FR), which is applied at a pressure centre (PR) located along the axis (A) of rotation, with a respective first reaction force (F1) and a respective second reaction force (F2) which are applied at a respective first reaction centre (R1) and at a respective second reaction centre (R2), and that, having defined:

   X1: an axial distance between the first reaction centre (R1) and the pressure centre (PR);
   X2: an axial distance between the second reaction centre (R2) and the pressure centre (PR);
   P1: a pitch diameter of the first outboard row (C1) of rolling bodies (13);
   P2: a pitch diameter of the second inboard row (C2) of rolling bodies (13);
   $\alpha$: an angle of contact of the first outboard row (C1) of rolling bodies (13);
   $\beta$: an angle of contact of the second inboard row (C2) of rolling bodies (13);
   the values of the trigonometric tangent of the two angles of contact $\alpha$ and are $\beta$ linked by the following relationship:

   $$tg\beta = tg\alpha * \left[ \frac{X2 + X1}{X1} - \frac{X2}{X1} * K \right]$$

   where:

   $$K = \frac{P1}{P2}$$

   and that the pitch diameter (P1) of the first outboard row (C1) of rolling bodies (13) is equal to the pitch diameter of the second inboard row (C2) of rolling bodies (13), whereby K = 1.

2. A wheel hub assembly according to Claim 1, **characterized in that** the outer diameters of the rolling bodies (13) of the first outboard row (C1) of rolling bodies (13) have sizes which are equal to the sizes of the outer diameters of the rolling bodies (13) of the second inboard row (C2) of rolling bodies (13).

3. A wheel hub assembly according to Claim 1, **characterized in that** the outer diameters of the rolling bodies (13) of the first outboard row (C1) of rolling bodies (13) have sizes which are smaller than the sizes of the outer diameters of the rolling bodies (13) of the second inboard row (C2) of rolling bodies (13).

4. A wheel hub assembly according to Claim 1, **characterized in that** it also comprises an inner ring (11) and an outer ring (12) which are coaxial with respect to one another and to the axis (A) of rotation and which revolve with respect to one another because of the interposition of the two rows (C1, C2) of rolling bodies (13); the inner raceway (111, 112) and the outer raceway (121, 122) of each row (C1) (C2) of rolling bodies (13) being obtained externally to the inner ring (11) and, respectively, internally to the outer ring (12).

5. A wheel hub assembly according to Claim 4, **characterized in that** the inner ring (11) is a flanged ring and is provided with a flange (14) which is transversal to the axis (A) of rotation for fitting a wheel.

6. A wheel hub assembly according to Claim 5, **characterized in that** the inner raceway (111) of the first row (C1) of rolling bodies (13) is directly obtained on the outside of the inner ring (11) and close to the flange (14).

7. A wheel hub assembly according to Claim 6, **characterized in that** the inner ring (11) comprises a spindle (15) which extends along the axis (A) of rotation and it is made of the same material as the flange (14); the inner raceway (111) of the first outboard row (C1) of rolling bodies (13) being directly obtained on an outer surface of the spindle (15).

8. A wheel hub assembly according to Claim 7, **characterized in that** the inner ring (11) also comprises an applied inner ring (16) which is mounted on the spindle (15); the inner raceway (112) of the second inboard row (C2) of rolling bodies (13) being directly obtained on the applied inner ring (16).

9. A wheel hub assembly according to Claim 8, **characterized in that** the outer raceways of the first and the second inboard row (C2) of rolling bodies (13) are directly obtained on an inner surface of the outer ring (12).


**Patentansprüche**

1. Radnabenanordnung (10) (10') mit einer Doppelreihe (C1, C2) von Wälzkörpern (13), wobei die Radnabenanordnung eine Drehachse (A) aufweist und für jede Reihe (C1) (C2) von Wälzkörpern (13) eine Innenlaufbahn (111, 112) und eine Außenlaufbahn (121, 122) aufweist, welche axial entsprechend einem jeweiligen Kontaktwinkel und entlang einer jeweiligen Lastlinie (L1, L2) angeordnet sind, um zu ermöglichen, dass die Anordnung kombinierte Lasten trägt; wobei der Kontaktwinkel einer ersten, äußeren Reihe (C1) von Wälzkörpern (13) von den zwei Reihen (C1, C2) von Wälzkörpern (13) einen Betrag hat, welcher vom Betrag des Kontaktwinkels einer zweiten inneren Reihe (C2) von Wälzkörpern (13) von den zwei Reihen (C1, C2) von Wälzkörpern (13) verschieden ist; **dadurch gekennzeichnet, dass** der Kontaktwinkel der ersten, äußeren Reihe (C1) von Wälzkörpern (13) einen Betrag hat, welcher größer als ein Betrag der zweiten inneren Reihe (C2) von Wälzkörpern (13) ist; die erste äußere Reihe (C1) von Wälzkörpern (13) und die zweite innere Reihe (C2) von Wälzkörpern (13) auf eine Radlast (FR), welche an einem Druckmittelpunkt (PR) aufgebracht wird, der entlang der Drehachse (A) angeordnet ist, mit einer jeweiligen ersten Reaktionskraft (F1) und einer jeweiligen zweiten Reaktionskraft (F2) reagieren, welche an einem jeweiligen ersten Reaktionsmittelpunkt (R1) und an einem jeweiligen zweiten Reaktionsmittelpunkt (R2) aufgebracht werden, und dass, wenn definiert wird:

X1: axialer Abstand zwischen dem ersten
Reaktionsmittelpunkt (R1) und dem Druckmittelpunkt (PR);
X2: axialer Abstand zwischen dem zweiten
Reaktionsmittelpunkt (R2) und dem Druckmittelpunkt (PR);
P1: Wälzkreisdurchmesser der ersten äußeren Reihe (C1)
von Wälzkörpern (13);
P2: Wälzkreisdurchmesser der zweiten inneren Reihe (C2)
von Wälzkörpern (13);
$\alpha$: Kontaktwinkel der ersten äußeren Reihe (C1) von Wälzkörpern (13);
$\beta$: Kontaktwinkel der zweiten inneren Reihe (C2) von
Wälzkörpern (13);
die Werte des trigonometrischen Tangens der beiden Kontaktwinkel $\alpha$ und $\beta$ durch die folgende Beziehung verknüpft sind:

$$\tan \beta = \tan \alpha * \left[ \frac{X2 + X1}{X1} - \frac{X2}{X1} * K \right],$$

wobei:

$$K = \frac{P1}{P2}$$

und dass der Wälzkreisdurchmesser (P1) der ersten äußeren Reihe (C1) von Wälzkörpern (13) gleich dem Wälzkreisdurchmesser der zweiten inneren Reihe (C2) von Wälzkörpern (13) ist, wobei K = 1.

2. Radnabenanordnung nach Anspruch 1, **dadurch gekennzeichnet, dass** die Außendurchmesser der Wälzkörper (13) der ersten äußeren Reihe (C1) von Wälzkörpern (13) Größen aufweisen, welche gleich den Größen der Außendurchmesser der Wälzkörper (13) der zweiten inneren Reihe (C2) von Wälzkörpern (13) sind.

3. Radnabenanordnung nach Anspruch 1, **dadurch gekennzeichnet, dass** die Außendurchmesser der Wälzkörper (13) der ersten äußeren Reihe (C1) von Wälzkörpern (13) Größen aufweisen, welche kleiner als die Größen der Außendurchmesser der Wälzkörper (13) der zweiten inneren Reihe (C2) von Wälzkörpern (13) sind.

4. Radnabenanordnung nach Anspruch 1, **dadurch gekennzeichnet, dass** sie außerdem einen Innenring (11) und einen Außenring (12) aufweist, welche koaxial zueinander und zu der Drehachse (A) sind und welche sich aufgrund der zwischen ihnen angeordneten zwei Reihen (C1, C2) von Wälzkörpern (13) relativ zueinander drehen; wobei die Innenlaufbahn (111, 112) und die Außenlaufbahn (121, 122) jeder Reihe (C1) (C2) von Wälzkörpern (13) außen in Bezug auf den Innenring (11) bzw. innen in Bezug auf den Außenring (12) erhalten werden.

5. Radnabenanordnung nach Anspruch 4, **dadurch gekennzeichnet, dass** der Innenring (11) ein Flanschring ist, der mit einem Flansch (14) versehen ist, welcher quer zu der Drehachse (A) ausgebildet ist, zur Anbringung eines Rades.

6. Radnabenanordnung nach Anspruch 5, **dadurch gekennzeichnet, dass** die Innenlaufbahn (111) der ersten Reihe (C1) von Wälzkörpern (13) unmittelbar an der Außenseite des Innenringes (11) und in der Nähe des Flansches (14) erhalten wird.

7. Radnabenanordnung nach Anspruch 6, **dadurch gekennzeichnet, dass** der Innenring (11) eine Spindel (15) aufweist, welche sich entlang der Drehachse (A) erstreckt und aus demselben Material wie der Flansch (14) hergestellt ist; wobei die Innenlaufbahn (111) der ersten äußeren Reihe (C1) von Wälzkörpern (13) unmittelbar an einer Außenfläche der Spindel (15) erhalten wird.

8. Radnabenanordnung nach Anspruch 7, **dadurch gekennzeichnet, dass** der Innenring (11) außerdem einen aufgesetzten Innenring (16) aufweist, welcher auf der Spindel (15) angebracht ist; wobei die Innenlaufbahn (112) der zweiten inneren Reihe (C2) von Wälzkörpern (13) unmittelbar an dem aufgesetzten Innenring (16) erhalten wird.

9. Radnabenanordnung nach Anspruch 8, **dadurch gekennzeichnet, dass** die Außenlaufbahnen der ersten und der zweiten inneren Reihe (C2) von Wälzkörpern (13) unmittelbar an einer Innenfläche des Außenringes (12) erhalten werden.

**Revendications**

1. Ensemble de moyeu de roue (10) (10') comprenant une double rangée (C1, C2) de corps de roulement (13), l'ensemble de moyeu de roue ayant un axe (A) de rotation et comprenant, pour chaque rangée (C1) (C2) de corps de roulement (13), un chemin de roulement interne (111, 112) et un chemin de roulement externe (121, 122), qui sont disposés axialement en fonction d'un angle de contact respectif et le long d'une ligne de contraintes respective (L1, L2) afin de permettre à l'ensemble de supporter des charges combinées ; l'angle de contact d'une première rangée extérieure (C1) de corps de roulement (13) des deux rangées (C1, C2) de corps de roulement (13) ayant une amplitude qui est différente de l'amplitude de l'angle de contact d'une deuxième rangée intérieure (C2) de corps de roulement (13) des deux rangées (C1, C2) de corps de roulement (13) ; **caractérisé en ce que** l'angle de contact de la première rangée extérieure (C1) de corps de roulement (13) a une plus grande amplitude que la deuxième rangée intérieure (C2) de corps de roulement (13) ;

la première rangée extérieure (C1) de corps de roulement (13) et la deuxième rangée intérieure (C2) de corps de roulement (13) réagissent à une charge appliquée aux roues (FR), qui est appliquée à un centre de pression (PR) situé le long de l'axe de rotation (A), avec une première force de réaction respective (F1) et une deuxième force de réaction respective (F2) qui sont appliquées au niveau d'un premier centre de réaction respectif (R1) et au niveau d'un deuxième centre de réaction respectif (R2), et **en ce que**, avec :

X1 : une distance axiale entre le premier centre de réaction (R1) et le centre de pression (PR) ;
X2 : une distance axiale entre le deuxième centre de réaction (R2) et le centre de pression (PR) ;
P1 : un diamètre de pas de la première rangée extérieure (C1) de corps de roulement (13) ;
P2 : un diamètre de pas de la deuxième rangée intérieure (C2) de corps de roulement (13) ;
$\alpha$ : un angle de contact de la première rangée extérieure (C1) de corps de roulement (13) ;
$\beta$ : un angle de contact de la deuxième rangée intérieure (C2) de corps de roulement (13) ;
les valeurs de la tangente trigonométrique des deux angles de contact $\alpha$ et $\beta$ sont liées par la relation suivante :

$$tg\beta = tg\alpha \quad \frac{X2 + X1}{X1} \quad \frac{X2}{X1} \quad K$$

avec :

$$K = \frac{P1}{P2}$$

et **en ce que** le diamètre de pas (P1) de la première rangée extérieure (C1) de corps de roulement (13) est égal au diamètre de pas de la deuxième rangée intérieure (C2) de corps de roulement (13), où K = 1.

2. Ensemble de moyeu de roue selon la revendication 1, **caractérisé en ce que** les diamètres extérieurs des corps de roulement (13) de la première rangée extérieure (C1) de corps de roulement (13) ont des dimensions qui sont égales aux dimensions des diamètres extérieurs des corps de roulement (13) de la deuxième rangée intérieure (C2) de corps de roulement (13).

3. Ensemble de moyeu de roue selon la revendication 1, **caractérisé en ce que** les diamètres extérieurs des corps de roulement (13) de la première rangée extérieure (C1) de corps de roulement (13) ont des dimensions qui sont inférieures aux dimensions des diamètres extérieurs des corps de roulement (13) de la deuxième rangée intérieure (C2) de corps de roulement (13).

4. Ensemble de moyeu de roue selon la revendication 1, **caractérisé en ce qu'**il comprend également une bague interne (11) et une bague externe (12) qui sont coaxiales l'une par rapport à l'autre et par rapport à l'axe (A) de rotation et qui tournent l'une par rapport à l'autre en raison de l'interposition des deux rangées (C1, C2) de corps de roulement (13) ; le chemin de roulement interne (111, 112) et le chemin de roulement externe (121, 122) de chaque rangée (C1) (C2) de corps de roulement (13) étant obtenus à l'extérieur de la bague interne (11) et, respectivement, à l'intérieur de la bague externe (12).

**5.** Ensemble de moyeu de roue selon la revendication 4, **caractérisé en ce que** la bague interne (11) est une bague bridée munie d'une bride (14) transversale à l'axe (A) de rotation de manière à ajuster une roue.

**6.** Ensemble de moyeu de roue selon la revendication 5, **caractérisé en ce que** le chemin de roulement interne (111) de la première rangée (C1) de corps de roulement (13) est obtenu directement à l'extérieur de la bague interne (11) et à proximité de la bride (14).

**7.** Ensemble de moyeu de roue selon la revendication 6, **caractérisé en ce que** la bague interne (11) comprend une broche (15) qui s'étend le long de l'axe (A) de rotation et qui est fabriquée en le même matériau que la bride (14) ; le chemin de roulement interne (111) de la première rangée extérieure (C1) de corps de roulement (13) étant obtenu directement sur une surface extérieure de la broche (15).

**8.** Ensemble de moyeu de roue selon la revendication 7, **caractérisé en ce que** la bague interne (11) comprend également une bague interne appliquée (16) qui est montée sur la broche (15) ; le chemin de roulement interne (112) de la deuxième rangée intérieure (C2) de corps de roulement (13) étant obtenu directement sur la bague interne appliquée (16).

**9.** Ensemble de moyeu de roue selon la revendication 8, **caractérisé en ce que** les chemins de roulement externes de la première et de la deuxième rangée intérieure (C2) de corps de roulement (13) sont directement obtenus sur une surface intérieure de la bague externe (12).

FIG. 1

FIG. 3

EP 2 380 751 B1

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2009232435 A1